# EUROPÄISCHE PATENTSCHRIFT

(11) **EP 4 109 368 B1**
(45) Veröffentlichungstag und Bekanntmachung des Hinweises auf die Patenterteilung: **03.12.2025**
(21) Anmeldenummer: 21181705.1
(22) Anmeldetag: 25.06.2021
(51) Int. Cl.: G06Q 10/08

(54) **VERFAHREN ZUM ERMITTELN EINER FEHLERURSACHE IN EINEM INTRALOGISTIKSYSTEM MITHILFE EINES GRAPHENMODELLS**
METHOD FOR DETERMINING THE CAUSE OF A FAULT IN AN INTRALOGISTICS SYSTEM USING A GRAPH MODEL
PROCÉDÉ DE DÉTERMINATION D'UNE CAUSE D'ERREUR DANS UN SYSTÈME INTRALOGISTIQUE À L'AIDE D'UN MODÈLE GRAPHIQUE

(43) Veröffentlichungstag der Anmeldung: 28.12.2022
(73) Patentinhaber: TGW Logistics GmbH, 4614 Marchtrenk (AT)
(72) Erfinder: MAHRINGER, Thomas, 4055 Pucking (AT)
(74) Vertreter: Burger, Hannes

(56) Entgegenhaltungen:
- EP-A1- 1 868 145
- DE-A1- 102018 217 308
- US-A1- 2014 084 060
- US-A1- 2015 073 853
- US-A1- 2020 084 601
- US-A1- 2020 258 031
- OH BYUNGSOO ET AL: "Enhancing Trust of Supply Chain Using Blockchain Platform with Robust Data Model and Verification Mechanisms", 2019 IEEE INTERNATIONAL CONFERENCE ON SYSTEMS, MAN AND CYBERNETICS (SMC), IEEE, 6 October 2019 (2019-10-06), pages 3504 - 3511, XP033667509, [retrieved on 20191126], DOI: 10.1109/SMC.2019.8913871
- PROTOGEROU AIKATERINI ET AL: "A graph neural network method for distributed anomaly detection in IoT", EVOLVING SYSTEMS, vol. 12, no. 1, 1 March 2021 (2021-03-01), Berlin/Heidelberg, pages 19 - 36, XP055976240, ISSN: 1868-6478, Retrieved from the Internet <URL:https://link.springer.com/content/pdf/10.1007/s12530-020-09347-0.pdf> DOI: 10.1007/s12530-020-09347-0
- STOJANOVIC LJILJANA ET AL: "Big-data-driven anomaly detection in industry (4.0): An approach and a case study", 2016 IEEE INTERNATIONAL CONFERENCE ON BIG DATA (BIG DATA), IEEE, 5 December 2016 (2016-12-05), pages 1647 - 1652, XP033056553, [retrieved on 20170202], DOI: 10.1109/BIGDATA.2016.7840777
- MENTZER JOHN T. ET AL: "DEFINING SUPPLY CHAIN MANAGEMENT", JOURNAL OF BUSINESS LOGISTICS, vol. 22, no. 2, 1 September 2001 (2001-09-01), pages 1 - 25, XP093206111, ISSN: 0735-3766, DOI: 10.1002/j.2158-1592.2001.tb00001.x

## Beschreibung

### Gebiet der Erfindung

Die Erfindung betrifft Logistiksysteme. Insbesondere betrifft die Erfindung ein computerimplementiertes Verfahren zum Ermitteln einer Fehlerursache in einem Intralogistiksystem, insbesondere in einem Lager- und Kommissioniersystem, basierend auf einem Graphenmodell des Intralogistiksystems. Weiterhin betrifft die Erfindung ein auf das Verfahren bezogenes Computerprogramm, ein Speichermedium sowie ein entsprechend konfiguriertes Intralogistiksystem mit einer Vielzahl von Komponenten, wobei die Komponenten eine Komponente zum Lagern von Waren, eine Komponente zum Bearbeiten von Aufträgen und eine Komponente zum Transport von Waren zwischen der Komponente zum Lagern von Waren und der Komponente zum Bearbeiten von Aufträgen aufweisen.

### Hintergrund der Erfindung

Moderne Intralogistiksysteme, wie beispielsweise Distributionszentren von Handelsorganisationen, sind hochkomplexe Anlagen mit tausenden oder sogar zehntausenden einzelnen Komponenten, die miteinander in technischer Wechselwirkung stehen. Solche Komponenten können beispielsweise Förderbänder, Sortierer, intelligente Regalsysteme, Lagersysteme oder weitere mechanische oder elektromechanische Baugruppen sein. Weiterhin sind intelligente Steuersysteme für die genannten Komponenten sowie Warehouse Control Systeme (WCS), Warehouse Management Systeme (WMS) und Materialflusssteuerungen vorgesehen, um die komplexen Abläufe und Funktionen zu steuern. Diese Steuersysteme erhalten Daten von den genannten Systemen, aber auch von Datenquellen wie RFID-Scannern, Barcodescannern, Temperatursensoren, Bewegungssensoren und ähnlichen Quellen, die in einem Intralogistiksystem implementiert sind.

Vor dem Hintergrund steigender Anforderungen an Verfügbarkeit und Performance ist eine Vermeidung von Fehlerzuständen oder Störungen ein wesentlicher Aspekt bei der Planung und beim Betrieb eines Intralogistiksystems. Tritt dennoch ein Fehler im Intralogistiksystem auf, kann eine schnelle Identifikation der Fehlerursache und eine umgehende Beseitigung dieser Ursachen längere Ausfallzeiten und Verzögerungen vermeiden. Bekannte Systeme bilden häufig die Intralogistiksysteme in einem statischen Modell des Intralogistiksystems ab. Dies kann beispielsweise ein Bauplan des Intralogistiksystems oder eine Stückliste der einzelnen Komponenten mit ihren jeweiligen Eigenschaften sein. Hier kann beispielsweise hinterlegt sein, welche Komponenten mechanisch oder elektrisch miteinander verbunden sind und wie eine räumliche Anordnung ausgestaltet ist. Ein Nachvollziehen von Auswirkungen, insbesondere bei Fehlerzuständen, kann eine Suche nach den Fehlerursachen unterstützen.

Aufgrund der enormen Komplexität heutiger Intralogistiksysteme ist ein Ermitteln einer Fehlerursache auf Basis von Bauplaninformationen oder Stücklisten nicht erfolgversprechend. Durch die komplexen Abhängigkeiten und Wechselwirkungen der großen Zahl an Komponenten und Konfigurationen sind viele funktionale und kausale Wechselwirkungen weder bekannt noch dokumentiert oder modelliert. In der Praxis erfolgt deswegen eine Analyse der Fehlerursache häufig auf Basis der Erfahrungen des Bedienpersonals. So kann ein Bediener beispielsweise aus Erfahrung einen ursächlichen Fehler in einer defekten Lichtschranke suchen, wenn die Leistung eines Kommissionier-Roboters abfällt.

Die US 2015/073853 A1 offenbart ein integriertes Lieferkettenmanagement mit Anomalieerkennung. Es wird ein Auftrag von einem "Supply Chain Program" (SCP) aufgenommen und zur weiteren Ausführung an ein "Asset Management Program" (AMP) weitergeleitet. In Kommunikation mit einem "Anomaly Detection Program" (ADP) wird evaluiert, ob ein Auftrag ausgeführt werden kann oder nicht. Das ADP verwendet dazu eine Vielzahl von Sensoren. Das ADP erstellt einen "Anomaly Report" und leitet diesen an das AMP weiter. Das ADP erstellt den "Anomaly Report" durch Abgleichen von Informationen der Sensoren mit den Daten in einer "engineering information system database". Dazu werden Schwellen verwendet, wobei bei einem Überschreiten einer Schwelle ein negativer "Anomaly Report" erstellt wird.

Oh Byungsoo et al: "Enhancing Trust of Supply Chain Using Blockchain Platform with Robust Data Model and Verification Mechanisms", 2019 IEEE International Conference on Systems, Man and Cybernetics (SMC), IEEE, 6. Oktober 2019 (2019-10-06), Seiten 3504-3511 offenbart ein neuartiges verteiltes Ledger-System für Lieferketten, das auf Blockchain-Technologie basiert und ein Anomalieerkennungs-Framework verwendet, um die semantische Korrektheit von Transaktionen zu überprüfen. Das Blockchain-Datenmodell ist darauf ausgelegt, Ereignisse in der Lieferkette darzustellen und die Rückverfolgbarkeit effizienter zu gestalten, indem ein Graphen-Datenmodell verwendet wird. Das smart contract-basierte Anomalieerkennungs-Framework umfasst generische und graphenbasierte Erkennungsmethoden, um fehlerhafte Transaktionen zu identifizieren.

Protogerou Aikaterini et al. "A graph neural network method for distributed anomaly detection in IoT", Evolving Systems, Bd. 12, Nr. 1, 1. März 2021 (2021-03-01), Seiten 19-36 offenbart ein System zur Verbesserung der Sicherheit bei IoT-Geräten, wobei ein Graph Neural Network (GNN) zur Anomalieerkennung bei einem Angriff auf das System verwendet wird. Dabei wird ein verteiltes System mit einer Mehrzahl von Einheiten vorgeschlagen, wobei jede Einheit ein GNN verwendet, um Anomalien zu erkennen und die Netzwerksicherheit zu verbessern.

Stojanovic Ljiljana et al: "Big-data-driven anomaly detection in industry (4.0): An approach and a case study", 2016 IEEE International Conference on Big Data, IEEE, 5. Dezember 2016, Seiten 1647-1652 offenbart einen neuartigen Ansatz für datengesteuertes Qualitätsmanagement in Industrieprozessen, um eine multidimensionale Analyse von Anomalien und deren Echtzeit-Erkennung im laufenden System zu ermöglichen. Der Ansatz besteht aus zwei Hauptschritten: dem Erlernen des normalen Verhaltens des Systems (basierend auf historischen Daten) und der Erkennung anomalen Verhaltens in Echtzeit (durch Verarbeitung von Echtzeitdaten).

Die DE 10 2018 217308 A1 offenbart ein Verfahren zum Erzeugen eines virtuellen Logistiknetzes. Ein eindeutig identifizierbarer Ladungsträger wird entlang einer Förderanlage transportiert und Ladungsträger-Daten des Ladungsträgers werden mit einer entlang der Förderanlage angeordneten Erfassungseinheit erfasst. Die Ladungsträger-Daten werden zusammen mit Erfassungseinheit-Daten an eine Datenauswerteeinheit übermittelt und in der Datenauswerteeinheit ausgewertet. Die Ladungsträger-Daten und die Erfassungseinheit-Daten werden zu Standortdaten und Bewegungsdaten des Ladungsträgers verknüpft und es wird ein virtuelles Logistiknetz erzeugt.

Die US 2020/258031 A1 offenbart ein System und Verfahren zum Bestimmen von Optimierungsmerkmale für einen Artikel mit Hilfe von künstlicher Intelligenz unter Verwendung von Vorhersagealgorithmen.

Die US 2020/084601 A1 offenbart ein System und Verfahren zur Vorhersage von Ausfallwahrscheinlichkeiten und zur Schätzung einer verbleibenden Nutzungsdauer in Echtzeit für physische Vermögenswerte mit Hilfe von Modellen.

Die US 2014/084060 A1 offenbart ein Steuergerät für Bestandsüberwachung zur Verwaltung eines Artikelbestands mit Hilfe von Identifizierungsinformationen von RFID-Etiketten.

Die EP 1 868 145 A1 offenbart einen Reverse-Fehleranalysator, welcher eine Gruppe von Diagnosetestverfahren bestimmt und spezifische Fehlermodi identifiziert.

Mentzer John T. et al: "Defining Supply Chain Management", Journal of Business Logistics, Bd. 22, Nr. 2, 1. September 2001 (2001-09-01), Seiten 1-25, offenbart einen funktionalen Umfang des Supply Chain Managements sowie wird der Unterschied zwischen Supply Chain Management und Logistik durch den Council of Logistics Management beschrieben.

### Offenbarung der Erfindung

Es kann als Aufgabe der Erfindung angesehen werden, ein verbessertes Verfahren zur Ermittlung einer Fehlerursache zu schaffen. Diese Aufgabe wird durch die unabhängigen Ansprüche gelöst. Insbesondere soll erreicht werden, dass das Ermitteln einer Fehlerursache nicht ausschließlich auf Basis der Erfahrung eines Bedieners durchgeführt wird, sondern eine skalierbare und effektive technische Alternativlösung geschaffen wird. Im Ergebnis kann vorteilhaft eine Verfügbarkeit und eine Produktivität eines Intralogistiksystems verbessert werden.

Hierbei liegen die folgenden Überlegungen zugrunde: In einem Intralogistiksystem existieren multiple komplexe Wirkzusammenhänge zwischen einzelnen Komponenten. Diese sind in der Regel multidimensional und komplex. Häufig ergeben sich technische Wirkzusammenhänge erst durch bestimmte Konfigurationen des Intralogistiksystems und sind häufig bei der Planung von Intralogistiksystemen nicht bekannt oder beschreibbar. Daraus folgt, dass mit den derzeit gegebenen Mitteln ein solches Intralogistiksystem aus den anfänglich zur Verfügung stehenden Informationen nicht vollständig modelliert werden kann, sodass ein solches Modell für eine verlässliche Fehlersuche nicht verwendet werden kann.

Es wird daher ein verbessertes Verfahren zum Ermitteln einer Fehlerursache in einem Intralogistiksystem bzw. einem Lager- und Kommissioniersystem vorgeschlagen. Ein erster Gedanke besteht darin, ein produktives Live-System eines solchen Intralogistiksystems als Ausgangspunkt zu wählen und die tatsächlichen Wirkzusammenhänge aus dem tatsächlichen Betrieb zu ermitteln. Hierbei werden in einem ersten Schritt eine Vielzahl von Referenzanomaliesequenzen bereitgestellt, relativ zu jeweils zugehörigen Normalbetriebssignalsequenzen aus Signalsequenzen einer Vielzahl von Komponenten des Intralogistiksystems. Signalsequenzen beschreiben hierbei Eigenschaften, Parameter und/oder Zustandsinformationen einer jeweiligen Komponente des Intralogistiksystems. Solche Signalsequenzen können zunächst als allgemeine Informationen verstanden werden, die geeignet sind, Komponenten eines Intralogistiksystems technisch zu beschreiben. Dies können beispielsweise elektrische Messwerte, Sensordaten, optische Eigenschaften, Daten jeder Art, mechanische Eigenschaften wie Abmessungen, Materialeigenschaften, physische Größen wie Gewicht, Dichte, Geschwindigkeit, Temperatur, chemische oder biologische Eigenschaften und weitere beschreibende Größen sein.

### Komponenten des Intralogistiksystems können

Komponenten zum Transport von Waren, insbesondere ein Einlager- und Auslagersystem umfassend Regalbediengeräte, beispielsweise Einebenenregalbediengeräte (Shuttles) und/oder Mehrebenenregalbediengeräte (stacker cranes), und/oder eine Fördertechnik zum Transport von Waren, wie beispielsweise eine stationäre Fördertechnik, insbesondere eine Hängefördertechnik und/oder eine bodengebundene Fördertechnik, und/oder eine mobile Fördertechnik, insbesondere autonom verfahrbare Transportfahrzeuge, z. B. Automated guided vehicles (AGV) und/oder Autonomous mobile robots (AMR),
Komponenten zum Sortieren von Waren, wie beispielsweise Sortiervorrichtungen und dergleichen,
Komponenten zum Bearbeiten von Aufträgen, insbesondere automatische und/oder manuelle Arbeitsplätze, beispielsweise Kommissionierstationen, Packstationen, Kommissionierroboter und dergleichen,
Komponenten zum Handhaben von Waren, beispielsweise Palettierer, Depalettierer, Greifroboter und dergleichen,
Komponenten zum Lagern von Waren, insbesondere Lagerplätze zum Lagern von Waren, welche beispielsweise durch mobile Lagerregale, stationäre Lagerregale und/oder dergleichen bereitgestellt sind,
Komponenten zum Unterstützen von Waren, insbesondere Ladehilfsmittel, beispielsweise Tablare, Behälter, Kartons, Hängetaschen zum hängenden Transport von Waren und dergleichen und/oder
Komponenten zum Verarbeiten von Daten, beispielsweise Softwarekomponenten, Steuerungsvorrichtungen, insbesondere Warehouse Management System (WMS), Warehouse Control System (WCS), und dergleichen
umfassen.

Eine Signalsequenz kann dabei einen zeitlichen Faktor aufweisen, also beispielsweise einen zeitlichen Verlauf oder eine Abfolge von Messwerten, eine Abfolge von Daten oder Informationen. Eine Signalsequenz kann ebenfalls eine Kombination aus Signalsequenzen verschiedener Komponenten aufweisen. Eine solche Signalsequenz kann während eines Betriebs eines Intralogistiksystems erzeugt werden und mit Zeitstempeln versehen sein, um eine Vergleichbarkeit von Systemzuständen zum selben Zeitpunkt vornehmen zu können. Eigenschaften einer Komponente können beispielsweise statische Größen wie beispielsweise Maße, Gewicht, Material, Reibung, Leistung, Stromverbrauch, Temperatur sowie direkte, abgeleitete und/oder berechnete Prozesseigenschaften, wie beispielsweise ein Warenstrom, eine Warentransportrate, eine Kommissionierleistung, eine Auftragserfüllungsrate oder dergleichen sein.

Unter Parametern einer Komponente können beispielsweise konfigurierbare oder veränderliche Größen verstanden werden, die beispielsweise über eine Steuersoftware konfiguriert werden. Zustandsinformationen können beispielsweise Sensorinformationen zu einem bestimmten Zeitpunkt umfassen und elektrische, mechanische oder sonstige Zustände beschreiben. Zustände einer Komponente können auch definierbare Größen sein, die sich beispielsweise aus der Kombination verschiedener Messwerte, Sensorinformationen, Eigenschaften oder Parameter ergeben.

Zum Erfassen der Signalsequenzen kann das Intralogistiksystem eine Vielzahl von Sensoren aufweisen, welche Eigenschaften der Komponenten erfassen. Die Sensoren können stationär im Intralogistiksystem angeordnet oder mobil, beispielsweise mittels Drohnen oder autonom verfahrbaren Trägerfahrzeugen, in das Intralogistiksystem eingebracht werden.

Ein Beispiel für einen solchen Sensor kann beispielsweise ein Temperatursensor, insbesondere eine Infrarotkamera, sein. Das Intralogistiksystem kann beispielsweise eine Vielzahl von Infrarotkameras aufweisen, welche Temperaturwerte von Komponenten des Intralogistiksystems kontinuierlich oder in vorbestimmten Intervallen aufzeichnen. Hierfür können die Infrarotkameras jeweils eine Vielzahl von Bildern, insbesondere einer der jeweiligen Infrarotkamera zugeordneten Komponente, erfassen. Es kann vorgesehen sein, dass aus den von den Infrarotkameras erfassten Bildern durch eine Auswerteeinheit eine (mehrdimensionale) Temperaturmatrix erstellt wird, wobei Temperaturwerte jedes Matrixpunktes für verschiedene Zeitpunkte vorliegen. Aus diesen Temperaturwerten kann beispielsweise eine zur jeweiligen Komponente korrespondierende Signalsequenz ermittelt werden.

Eine Normalbetriebssignalsequenz beschreibt einen Zustand zumindest eines Teils eines Intralogistiksystems in einem regulären fehlerfreien Betriebszustand. Anders gesagt soll der Normalbetrieb den Zustand eines Intralogistiksystems beschreiben, der eine vorgesehene Produktivität oder einen vorgesehenen Durchsatz ohne eine Fehlfunktion einer betroffenen Komponente erreicht. Unter einer Anomalie soll in diesem Kontext eine Abweichung vom Normalbetrieb bzw. ein Fehlerzustand des Intralogistiksystems oder eines Teils bzw. einer Komponente des Intralogistiksystems verstanden werden. Eine Anomaliesignalsequenz kann also als Signalsequenz verstanden werden, die bei einem Fehlerfall oder Ausfall von Komponenten entsteht und deren Muster sich von der Normalbetriebssignalsequenz unterscheidet. Tritt also in einem Intralogistiksystem ein Fehler auf, ergeben sich durch die gestörten Abläufe veränderte Signalsequenzmuster, die beispielsweise durch fehlerbedingte Messwertveränderungen an Sensoren entstehen.

Der Begriff der Referenzanomaliesignalsequenzen soll eine Eignung dieser Anomaliesignalsequenzen zur Erkennung oder Referenzieren einer Anomaliesignalsequenz vor dem Hintergrund einer gegebenen Normalbetriebssignalsequenz beschreiben. Anders ausgedrückt können Referenzanomaliesignalsequenzen in größerer Zahl über einen längeren Zeitraum in einer Datenbank gespeichert und/oder zusätzlich verifiziert werden, um dann als Referenz zur Erkennung von Anomalien verwendet zu werden. Gemäß einem Beispiel sind Referenzanomaliesignalsequenzen verifizierte und/oder historische Anomaliesignalsequenzen. Gemäß einem weiteren Beispiel sind die Referenzanomaliesignalsequenzen aus Signalsequenzen anderer Intralogistiksysteme generiert. Die Referenzanomaliesignalsequenzen können somit bekannte Anomaliesignalsequenzen aus einem Intralogistiksystem und/oder zumindest einem anderen Intralogistiksystem aufweisen.

Auf Basis der Vielzahl der bereitgestellten Referenzanomaliesignalsequenzen wird in einem nächsten Schritt ein Graphenmodell berechnet. Dieses Graphenmodell beschreibt eine technische Wechselwirkung der Komponenten des Intralogistiksystems mithilfe der Eigenschaften, Parameter und/oder Zustandsinformationen. Diese Wechselwirkungsbeziehungen können beispielsweise über Knoten und Kanten des Graphenmodells beschrieben sein. Der zugrunde liegende Gedanke kann darin gesehen werden, dass man einen Fehlerfall des Systems als Manifestation oder Sichtbarmachung von gegebenen Wechselwirkungen und funktionalen Zusammenhängen nutzt.

Anders gesagt soll der Effekt genutzt werden, dass sich im Falle einer Fehlfunktion einer oder mehrerer Komponenten die Folgewirkungen als veränderte Sensorwerte oder Zustandsinformationen bemerkbar machen und die Wechselwirkungen damit erfassbar und/oder beschreibbar werden. Aufbauend auf diesem Grundgedanken soll nun auf einer Vielzahl solcher Anomaliezustände mithilfe maschineller Analyseverfahren ein technischer Wirkzusammenhang determiniert werden. Der Begriff Berechnen soll hier alle Möglichkeiten und Wege zum logischen oder analytischen Erzeugen eines Graphenmodells eines Intralogistiksystems mit technischen Mitteln beschreiben. Beispiele hierfür können statistische Berechnungen oder auch Abfolgen von logischen Computeroperationen sein.

Graphenmodelle eignen sich aufgrund ihrer netzartigen multidimensionalen Struktur zur Modellierung hochkomplexer Wirkzusammenhänge wie beispielsweise bei Intralogistiksystemen.

Das Berechnen eines Graphenmodells kann beispielsweise eine analytische prozessorunterstützte Ableitung und Speicherung umfassen. Gemäß einem Beispiel kann das Berechnen ein logisches Ableiten und/oder Erzeugen einer Interaktionsfunktion zwischen mindestens zwei Komponenten eines Intralogistiksystems umfassen. Eine Interaktionsfunktion kann dabei einen logisch oder mathematisch beschreibbaren Wirkzusammenhang zwischen zwei technischen Komponenten eines Intralogistiksystems beschreiben. Der Begriff Graphenmodell soll an dieser Stelle den grundsätzlichen Modellierungsansatz beschreiben, der eine Vielzahl von konkreten technischen Implementierungen, beispielsweise in verschiedenen Datenbankstrukturen oder auch ein Trainieren eines künstlichen neuronalen Netzes, umfassen kann.

In einem darauffolgenden Schritt werden Operativanomaliesignalsequenzen relativ zu einer zugehörigen Normalbetriebssignalsequenz aus Signalsequenzen einer Vielzahl von Komponenten des Intralogistiksystems bereitgestellt. Unter einer Operativanomaliesignalsequenz kann beispielsweise eine Signalsequenz aus einem produktiven operativen Intralogistiksystem zu einem aktuellen Zeitpunkt verstanden werden. Anders gesagt kann es sich hierbei um einen aktuell erfassten Fehlerzustand des Intralogistiksystems mit den zugehörigen Signalsequenzen handeln, die beispielsweise durch die Erfassung einer Vielzahl von Sensorinformationen über den betreffenden Zeitraum erzeugt wurden. Der Begriff Operativanomaliesignalsequenz soll verdeutlichen, dass diese Signalsequenz einerseits einen operativen oder aktuellen Fehlerzustand oder Anomalie beschreibt. Gemäß einem Beispiel repräsentiert die Operativanomaliesignalsequenz einen aktuellen Fehlerzustand des Intralogistiksystems noch ohne eine Angabe eines ursächlichen Fehlers.

Im Kontext der Zielsetzung des Verfahrens wird nun, basierend auf dem im vorherigen Schritt berechneten Graphenmodell, eine Operativanomalieursacheninformation zu dieser Operativanomaliesignalsequenz, also eine ursächliche Fehlerursache, berechnet. Mit anderen Worten werden die berechneten funktionalen Wirkzusammenhänge im Intralogistiksystem, die im Graphenmodell gespeichert und hinterlegt sind, nun genutzt, um eine ursächliche Fehlerquelle zu einer bestimmten Anomaliesignalsequenz zu ermitteln. Als Vorteil dieses Verfahrens kann eine deutlich effektivere Fehlersuche und Fehlerbeseitigung angegeben werden, da über ein intralogistiksystemspezifisches Graphenmodell die Wirkzusammenhänge teilweise oder vollständig abgebildet werden können und selbst mehrstufige oder netzwerkartige Wirkzusammenhänge maschinell abgebildet und verarbeitet werden können.

In einer Ausführungsform des Verfahrens erfolgt zusätzlich ein Bereitstellen einer Referenzanomalieursacheninformation in Bezug auf die Referenzanomaliesignalsequenzen. Ein Berechnen des Graphenmodells erfolgt zusätzlich auf Basis dieser Referenzanomalieursacheninformation. Mit anderen Worten wird das Graphenmodell nicht nur auf Basis der Referenzanomaliesignalsequenzen berechnet, sondern zusätzlich auf Basis der zugeordneten ursächlichen Fehlerinformationen. Der Begriff Referenzanomalieursacheninformation soll auf eine oder mehrere Fehlerquellen hinweisen. Dies können gemäß einem Beispiel ursächliche Fehlerquellen, eine Vielzahl von ursächlichen Fehlerquellen oder auch Folgefehlerquellen sein. Durch diese Erweiterung kann eine Qualität der Modellierung und somit eine Qualität und Geschwindigkeit der Fehlerursachenermittlung verbessert werden.

In einer Ausführungsform des Verfahrens erfolgt das Bereitstellen der Referenzanomalieursacheninformation über eine Mensch-Maschine-Schnittstelle (Human Machine Interface). Eine solche Schnittstelle kann beispielsweise ein Ein/Ausgabegerät eines Bedieners sein, wodurch eine Auswahl oder Eingabe durch einen Bediener ermöglicht wird. Auf diese Weise kann vorteilhaft ein Erfahrungswissen eines menschlichen Bedieners mit in das Graphenmodell einfließen.

In einer Ausführungsform des Verfahrens erfolgt das Berechnen des Graphenmodells mithilfe von Verfahren der Graphen-Analyse, Machine Learning, Data Mining, Warteschlangentheorie und/oder Knowledge Discovery in Databases (KDD). Anders ausgedrückt erfolgt das Berechnen beispielsweise mit Graphen-Algorithmen (graph algorithms), die ein Erzeugen und Speichern eines intralogistiksystemspezifischen Graphenmodells unterstützen. Gemäß einem Beispiel weist ein Graphenmodell eine Vielzahl von Kanten und Knoten auf. Gemäß einem weiteren Beispiel weisen Kanten des Graphenmodells eine Gewichtung auf. Gemäß einer Ausführungsform weist die Graphen-Analyse im Schritt des Berechnens des Graphenmodells eine Konnektivitätsanalyse, Zugehörigkeitsanalyse und/oder Pfadanalyse auf. Diese Analyseverfahren können vorteilhaft Wechselwirkungsbeziehungen zwischen Komponenten eines Intralogistiksystems erkennen und speichern.

In einer Ausführungsform der Erfindung weist das Bereitstellen der Referenzanomaliesignalsequenz oder der Operativanomaliesignalsequenz ein Erkennen einer Referenzanomaliesignalsequenz oder der Operativanomaliesignalsequenz aus einer Signalsequenz durch KI-basierte Mustererkennung auf. Diese Ausführungsform bezieht sich anders ausgedrückt auf die Frage, mit welchen technischen Mitteln eine Anomalie im System überhaupt erkannt werden kann. Hierzu wird vorgeschlagen, insbesondere ein künstliches neuronales Netz beispielsweise mit Normalbetriebssignalsequenzen zu trainieren, um darauf basierend abweichende Muster, also Anomaliesignalsequenzen, zu erkennen. Gemäß einem Beispiel wird ein künstliches neuronales Netz mit validierten Referenzanomaliesignalsequenzen trainiert, um vorteilhaft eine Steigerung der Qualität der Erkennung zu erreichen.

In einer Ausführungsform erfolgt das Bereitstellen der Referenzanomalieursacheninformation durch ein künstliches neuronales Netz, das mit validierten Kombinationen aus Anomaliesignalsequenzen und zugehörigen Anomalieursacheninformation trainiert ist. Mit anderen Worten liegt hier die Idee zugrunde, dass nicht ein Bediener die Fehlerursache manuell eingibt, sondern bekannte und validierte Kombinationen aus typischen Anomaliesignalsequenzen mit den zugehörigen validierten Fehlerursachen, also Anomalieursacheninformationen, genutzt werden. Diese von einem KI-System ermittelte Anomalieursacheninformation geht dann als zusätzliche Information in die Berechnung des Graphenmodells ein. Gemäß einem Beispiel umfasst das Bereitstellen der Referenzanomalieursacheninformation ein Determinieren und/oder Korrigieren von fehlerhaften Zuordnungen von Referenzanomalieursacheninformationen zu Referenzanomaliesignalsequenzen.

In einer Ausführungsform erfolgt das Bereitstellen der Referenzanomalieursacheninformation durch eine Abfrage einer Datenbank mit validierten Kombinationen aus Referenzanomaliesignalsequenzen und zugehörigen Referenzanomalieursacheninformationen. Dies kann bedeuten, dass vorab geprüfte und verifizierte Kombinationen aus Referenzanomaliesignalsequenzen und den zugehörigen Fehlerursachen, also den Referenzanomalieursacheninformationen, aufbereitet, gespeichert und/oder Intralogistiksysteme an verschiedenen Standorten zur zuverlässigen Fehlererkennung zur Verfügung gestellt werden können. Je größer die Zahl der verifizierten Datensätze ist, desto höher kann eine Genauigkeit der Erkennung und Rückverfolgung von Fehlerursachen sein.

In einer Ausführungsform umfasst der Schritt des Bereitstellens der Referenzanomalieursacheninformation in Bezug auf die Referenzanomaliesignalsequenz und/oder der Schritt des Bereitstellens der Operativanomalieursacheninformation in Bezug auf die Operativanomaliesignalsequenzen den Schritt des Berechnens einer Wahrscheinlichkeit des Auftretens einer jeweiligen Anomalieursache. Dies kann beispielsweise bedeuten, dass für ein Fehlerereignis, also eine Anomaliesignalsequenz, mehrere ursächliche Fehlerquellen infrage kommen. So kann beispielsweise ein bestimmter Laufzeitfehler statistisch über eine Vielzahl von Intralogistiksystemen und einen längeren Zeitraum verschiedene Ursachen haben. Ursächlich können hierfür beispielsweise in 70 % der Fälle defekte Klebestreifen, in 20 % der Fälle defekte Folien, in 5 % der Fälle Verschmutzungen und in weiteren 5 % sonstige Ursachen vorliegen. Dies kann vorteilhaft das Einbeziehen von mehreren Fehlerursachen zusammen mit einer entsprechenden Gewichtung in eine Modellierung des Gesamtsystems erlauben.

Gemäß einer Ausführungsform ist das Graphenmodell als Adjazenzmatrix, Adjazenzliste oder Inzidenzmatrix einer Graphen-Datenstruktur speicherbar. Technisch gesehen ist es notwendig, die Abbildung der Wirkzusammenhänge auf einem Computersystem zu ermöglichen. Hierzu wird vorgeschlagen, das Intralogistiksystem als Projektion in einer Matrix bzw. Adjazenzliste computertechnisch speicherbar zu gestalten. In einer weiteren Ausführungsform erfolgt ein Bereitstellen einer Konfiguration des Intralogistiksystems und das Berechnen des Graphenmodells wird zusätzlich auf Basis der Konfiguration des Intralogistiksystems ausgeführt. Unter einer Konfiguration des Intralogistiksystems können beispielsweise jegliche Informationen und Dokumentationen im Rahmen des Product-Lifecycle-Managements verstanden werden. Insbesondere bei der Planung und Konfiguration eines Intralogistiksystems werden umfangreiche Dokumentationen, Stücklisten, Baupläne und ähnliche Informationen erzeugt, die bei der Berechnung des Graphenmodells als Eingangsgrößen genutzt werden können. Zum Zeitpunkt des Designs eines Intralogistiksystems können beispielsweise bekannte Abhängigkeiten und Wechselwirkungsbeziehungen bereits in Form von gewichteten Kanten und Knoten im Modell hinterlegt werden.

In einer Ausführungsform weist das Verfahren weiterhin einen Schritt des Generierens optimierter Konfigurationsinformationen des Intralogistiksystems und/oder seiner Komponenten auf Basis des berechneten Graphenmodells des Intralogistiksystems auf. Hier liegt der Gedanke zugrunde, dass durch die Berechnung eines Graphenmodells, also einer digitalen Abbildung von technischen funktionalen Wechselbeziehungen zwischen den Komponenten eines Intralogistiksystems, Erkenntnisse über Wahrscheinlichkeiten und Ursachen von Fehlern gesammelt werden können. Diese Erkenntnisse können verwendet werden, um Intralogistiksysteme robuster und weniger fehleranfällig zu gestalten. Diese Informationen können beispielsweise im Rahmen einer Projektierung und Planung derartiger Intralogistiksysteme verwendet werden. Gemäß einer Ausführungsform erfolgt das Generieren optimierter Konfigurationsinformationen des Intralogistiksystems derart, dass eine Wahrscheinlichkeit eines Auftretens von Operativanomaliesignalsequenzen minimiert ist. Dies kann bedeuten, dass das Auftreten von Fehlerereignissen und Anomalien bereits durch einen optimierten Aufbau und optimierte Konfiguration verringert ist. Ein damit erzielter Vorteil können robustere Intralogistiksysteme mit einer verringerter Fehleranfälligkeit sein.

In einer Ausführungsform erfolgt das Bereitstellen der Referenzanomaliesignalsequenzen derart, dass die mehreren Referenzanomaliesignalsequenzen zumindest teilweise einen denselben Zeitraum betreffen. Dies bedeutet, dass beispielsweise aus verschiedenen Bereichen eines Intralogistiksystems, insbesondere von verschiedenen Komponenten, oder auch intralogistiksystemübergreifend an verschiedenen Standorten Anomaliesignalsequenzen, beispielsweise auch Operativanomaliesignalsequenzen, die den gleichen Zeitabschnitt betreffen, ausgewertet werden. Anders ausgedrückt werden mehrere Signalströme parallel betrachtet. Auf diese Weise können größere Zusammenhänge erkannt und für die Fehlererkennung verwendet werden.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein vereinfachtes Intralogistiksystem mit ausgewählten Komponenten gemäß dem Stand der Technik;
Fig. 2 zeigt Beispiele verschiedener Arten von Signalsequenzen von Komponenten eines Intralogistiksystems;
Fig. 3 zeigt ein erfindungsgemäßes Verfahren zum Ermitteln einer Fehlerursache in einem Intralogistiksystem;
Fig. 4 zeigt ein Beispiel eines Graphenmodells gemäß dem Stand der Technik;
Fig. 5 zeigt einen Ausschnitt aus einem Intralogistiksystem mit einem Palettierer, einem Sequenzierer, einem Transportpfad und weiteren Komponenten;
Fig. 6 zeigt eine erfindungsgemäße Fehleranalyseeinheit mit einer Graphendatenbank und Anomalieerkennungseinheit;
Fig. 7 zeigt eine erfindungsgemäße Fehler-Analyseeinheit mit einer Mensch-Maschine-Schnittstelle zum Tagging von wahrscheinlichen Fehlerursachen.

Die Figuren sind lediglich schematisch und nicht maßstabsgetreu. Gleiche Bezugszeichen bezeichnen in den verschiedenen Figuren gleiche oder gleichwirkende Merkmale.

### Ausführungsbeispiele

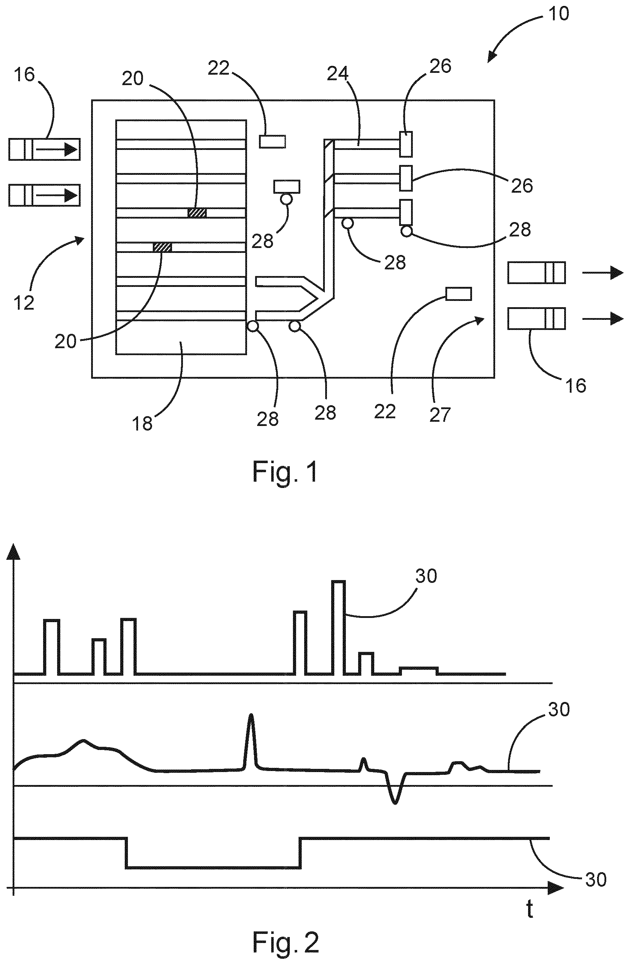

Fig. 1 zeigt ein Intralogistiksystem 10, das beispielsweise als Distributionszentrum für verschiedene Waren ausgeführt sein kann. Das gezeigte Intralogistiksystem 10 umfasst
ein Regalsystem 18 zum Lagern der Waren,
Arbeitsplätze 26 zum Bearbeiten von zuvor elektronisch erfassten Aufträgen,
ein Einlager- und/oder Auslagersystem, welches das Regalsystem 18 und die Arbeitsplätze 26 fördertechnisch verbindet. Das Regalsystem 18 weist eine Vielzahl von ortsfest aufgestellten Lagerregalen (Komponenten zum Lagern von Waren) auf.

Das Einlager- und/oder Auslagersystem umfasst ein oder mehrere Regalbediengeräte 20 sowie eine mobile Fördertechnik 22, beispielsweise AGV und/oder AMR, und/oder eine stationäre Fördertechnik 24 (Komponenten zum Transport von Waren), um Waren 14 in die Lagerregale einzulagern oder aus diesen auszulagern sowie um die Waren 14 zwischen dem Regalsystem 18 und den Arbeitsplätzen 26 zu transportieren.

Gemäß dem gezeigten Beispiel sind die Arbeitsplätze 26 zum Kommissionieren von Waren gemäß den Aufträgen ausgebildet. Hierfür können Waren 14 an einem Arbeitsplatz 26 mittels der Fördertechnik 22, 24 bereitgestellt und in Zielladehilfsmittel, insbesondere in eine Versandpackung, geladen werden. Optional ist ein Wareneingang 12 vorgesehen, wo Waren 14 (in Fig. 1 nicht gezeigt) mithilfe von Lieferfahrzeugen 16 angeliefert werden. Diese können beispielsweise im Regalsystem 18 gelagert werden.

Darüber hinaus kann das Intralogistiksystem einen Warenausgang 27 aufweisen. Die fertig kommissionierten und verpackten Waren 14 können mit einer weiteren (mobilen und/oder stationären) Fördertechnik 22 von den Arbeitsplätzen 26 zum Warenausgang 27 transportiert werden. Dort werden sie wiederum von Lieferfahrzeugen 16 aufgenommen und abtransportiert.

Derartige Intralogistiksysteme 10 sind in der Regel sehr komplex und weisen eine Vielzahl verschiedenster Komponenten auf. Das Zusammenspiel aller Komponenten ist entscheidend für einen hohen Durchsatz und die geforderte Produktivität. Hierzu werden einerseits in der Entwurfsphase eines solchen Intralogistiksystems 10 bereits Optimierungen von Komponenten, Ressourcen und Abläufen implementiert. Weiterhin ist während des produktiven Betriebs des Intralogistiksystems 10 eine komplexe Sensorik 28 vorgesehen, um Einstellungen und Abläufe optimal aufeinander abzustimmen. Die Sensorik 28 erzeugt Informationen und Daten, die beispielsweise in Form von elektrischen Signalen zu einem zentralisierten Kontrollsystem übertragen werden können. Insbesondere das Verhalten solcher Signale über einen bestimmten Zeitraum kann häufig Aussagen über Betriebszustand, Fehlerereignisse, Konfigurationen und Parametrisierung zulassen.

Beispiele für derartige Signalsequenzen 30 sind in Fig. 2 beispielhaft gezeigt. Die hier auf einer Zeitachse aufgetragenen elektrischen Signalverläufe können beispielsweise, wie im ersten Beispiel dargestellt, diskrete definierte Zustände sein. Die Ordinate kann hier beispielsweise Strom oder Spannung, aber auch andere physikalische Größen darstellen. Möglich sind auch analoge Verläufe, wie im zweiten Beispiel dargestellt. Häufig sind ebenfalls Mischformen oder auch, wie im dritten Beispiel gezeigt, binäre Zustände, wie beispielsweise das Auslösen einer Lichtschranke. Signalsequenzen 30 können auch aus einer Zusammenstellung von mehreren Signalsequenzen 30 sein. Gemäß einem Beispiel betreffen diese mehreren parallelen Signalsequenzen 30 einen gleichen Zeitabschnitt. Signalsequenzen 30 sollen geeignet sein, Eigenschaften, Parameter und/oder Zustandsinformationen von Komponenten eines Intralogistiksystems 10 mithilfe von physikalischen Größen, Messwerten, Daten oder anderweitig geeigneten Informationen zu beschreiben. Die Signalsequenzen 30 können beispielsweise einen Temperaturverlauf von Komponenten des Intralogistiksystems 10, insbesondere während des Betriebs, beschreiben. Ebenso können die Signalsequenzen 30 eine Kommissionierleistung, eine Auftragserfüllungsrate oder dergleichen beschreiben.

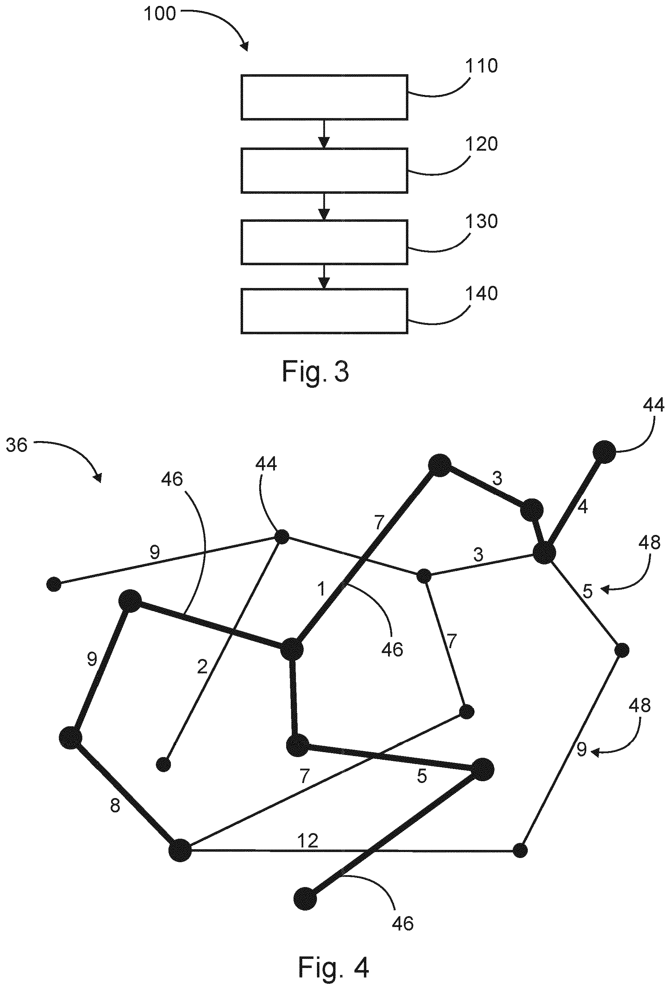

In Fig. 3 ist ein Beispiel eines Verfahrens 100 zum Ermitteln einer Fehlerursache mithilfe eines Graphenmodells gezeigt. Hierzu werden in einem ersten Schritt 110 Referenzanomaliesignalsequenzen 32 bereitgestellt. Diese können beispielsweise historische Anomaliesignalsequenzen sein, die insofern verifiziert sein können, dass sie tatsächlich einen Fehlerzustand oder einen unregelmäßigen Betriebszustand eines Teils bzw. einer Komponente des Intralogistiksystems 10 beschreiben. Hierzu sind Normalbetriebssignalsequenzen 34 bekannt, die einen fehlerfreien Betriebszustand des Intralogistiksystems 10 beschreiben können. Durch die Auswertung von Abweichungen der Signalsequenzen 30 zu diesen Normalbetriebssignalsequenzen 34 können Referenzanomaliesignalsequenzen 32 abgegrenzt und erkannt werden. Im Ergebnis können beispielsweise eine Vielzahl von gespeicherten Referenzanomaliesignalsequenzen 32 aus verschiedenen Zeitabschnitten und zu verschiedenen Fehlerbildern gespeichert sein.

Vor dem Hintergrund, dass sich Wirkzusammenhänge in einem Intralogistiksystem 10 insbesondere bei Fehlerereignissen zeigen und sichtbar werden, beinhalten folglich auch die Referenzanomaliesequenzen 32 Informationen über diese Wirkzusammenhänge. Um diese transparent, sichtbar und beschreibbar zu machen, wird in einem Schritt 120 aus diesen zugrunde liegenden Referenzanomaliesequenzen 32 ein Graphenmodell 36 berechnet. Die Berechnung kann beispielsweise mithilfe von geeigneten Algorithmen und Analyseverfahren, wie beispielsweise Graphenalgorithmen, Netzwerkanalyse, Graphen-Analyse, Machine Learning, Data Mining und/oder Knowledge Discovery in Databases (KDD) erfolgen.

Gemäß einem Beispiel wird KDD verwendet, um die Informationen zu den zugrunde liegenden Referenzanomaliesequenzen zu erfassen und algorithmisch in ein Graphenmodell zu überführen, welches zuvor durch ein Schema definiert wurde. Das dadurch entstehende Graphenmodell wird folglich verwendet, um Wirkzusammenhänge strukturiert abbilden zu können. Anders ausgedrückt werden über maschinelle Analyseverfahren funktionale oder kausale technische Zusammenhänge und Wechselwirkungen zwischen verschiedenen Komponenten aufgedeckt und diese multidimensionalen netzwerkartigen Verbindungen und Abhängigkeiten in einem wiederum maschinell verarbeitbaren Format in einem Computer bzw. einer geeigneten Datenbank abgespeichert.

Das Graphenmodell 36 beschreibt also eine technische Wechselwirkung der Komponenten des Intralogistiksystems 10 mithilfe der Eigenschaften, Parameter und/oder Zustandsinformationen der Komponenten. Gemäß einem Beispiel wird das Graphenmodell 36 mit weiteren neuen Referenzanomaliesequenzen 32 aktualisiert. Gegebenenfalls kann sich das Graphenmodell 36 auch durch eine veränderte Konfiguration des Intralogistiksystems 10, beispielsweise aufgrund von baulichen Maßnahmen, Wartungen und dergleichen, verändern.

In einem darauffolgenden Schritt 130 wird zum Zwecke der Fehlererkennung eine Operativanomaliesignalsequenz 38 relativ zu einer zugehörigen Normalbetriebssignalsequenz aus Signalsequenzen einer Vielzahl von Komponenten des Intralogistiksystems bereitgestellt. Anders ausgedrückt repräsentiert die Operativanomaliesignalsequenz 38 einerseits einen Anomaliezustand, also beispielsweise einen fehlerbehafteten Betriebszustand des Intralogistiksystems 10, andererseits repräsentiert die Operativanomaliesignalsequenz 38 eine Signalsequenz 30 aus einem Operativbetrieb des Intralogistiksystems 10 und soll einen meist noch nicht analysierten oder ausgewerteten Sachverhalt beschreiben. Beispielsweise meldet das Intralogistiksystem 10 einen Fehler und es wird zu diesem Fehler die zugehörige Operativanomaliesignalsequenz 38 erzeugt.

Beispielsweise kann diese Operativanomaliesignalsequenz 38 einen geeigneten Zeitraum beschreiben, in dem der Fehlerzustand aufgetreten ist. Beispielsweise kann dies ein Zeitraum von 30 Minuten vor dem Event bis zur Meldung des Fehlers sein. Diese auch als Drift bezeichneten langsamen Veränderungen sind über geeignet lange Zeiträume detektierbar und auswertbar. Zum Beispiel wird bei einer langsamen Erhitzung eines Lagers an einer Transportrolle ein langsamer Anstieg der Temperatur eines Sensors 28 in der zugehörigen Signalsequenz 30 sichtbar und kann bei einer Analyse der Signalsequenzen 30 als ursächliche Fehlerursache erkannt werden.

In einem weiteren Schritt 140 wird mithilfe des nun existierenden Graphenmodells 36 mit dem Wissen der bekannten Wirkzusammenhänge die zur Operativanomaliesignalsequenz 38 des Intralogistiksystems 10 gehörende Fehlerursache, also die Operativanomalieursacheninformation 40, abgeleitet und/oder berechnet. Mit anderen Worten erlaubt nun das beispielsweise in einer Graphendatenbank abgelegte Graphenmodell 36 des Intralogistiksystems 10 die Analyse von aktuellen Fehlerzuständen eines produktiven Intralogistiksystems 10 und die Feststellung der Fehlerursache. Mit dieser deutlich effektiveren Methode können einerseits Fehlerursachen schneller identifiziert werden, andererseits können rechtzeitig und auch prophylaktisch Maßnahmen zum Abwenden größerer Fehler oder Schäden oder auch Maßnahmen wie vorsorgliche Wartungsmaßnahmen eingeleitet werden (Preemptive Maintenance).

In Fig. 4 ist beispielhaft der grundsätzliche Aufbau eines Graphenmodells 36 gezeigt. Ein Graphenmodell besteht aus Knoten 44, die beispielsweise Komponenten des Intralogistiksystems 10 darstellen können. Kanten 46 verbinden Knoten 44 untereinander und stellen insofern eine Wechselwirkungsbeziehung dar. Kanten 46 können eine Gewichtung 48 aufweisen, die eine Stärke dieser Wechselwirkungsbeziehung symbolisieren kann. Werden beispielsweise durch eine Vielzahl von Referenzanomaliesignalsequenzen 32 bestimmte Wechselwirkungsbeziehungen häufig manifestiert, werden im Modell an den zugehörigen Kanten 46 höhere Gewichtungen 48 verankert. Grundsätzlich kann als Vorteil von Graphenmodellen 36 die Möglichkeit gesehen werden, komplexe Abhängigkeiten und Strukturen datentechnisch abzubilden.

Die Analyse solcher Graphenmodelle 36 zum Zwecke der Ermittlung von Fehlerursachen kann beispielsweise durch eine Graphen-Analyse erfolgen. Diese kann eine Konnektivitätsanalyse, Zugehörigkeitsanalyse und/oder Pfadanalyse aufweisen. Entsprechende generische Analyseverfahren sind im Stand der Technik weitestgehend bekannt und beschrieben.

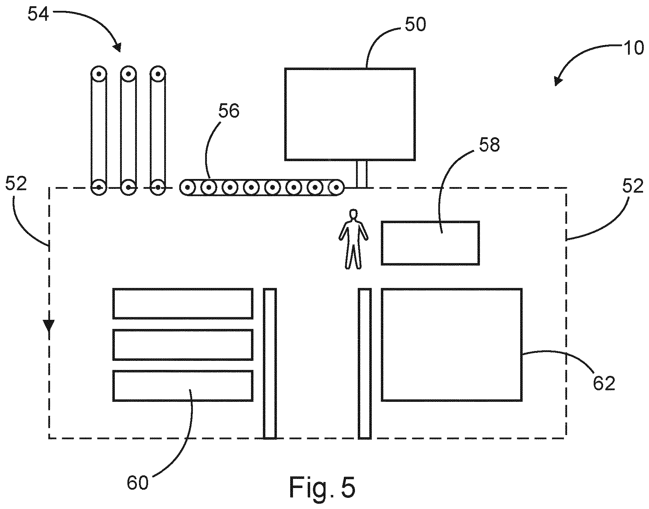

In Fig. 5 ist ein Lagerbereich als Ausschnitt aus einem Intralogistiksystem 10 gezeigt, das den Zusammenhang zwischen einem diagnostizierten Fehler und den zugehörigen Fehlerursachen verdeutlichen soll. Ein Palettierer 50 ist an einem Transportpfad 52 angeordnet, der einen Weg von Transportgütern 14 durch den Lagerbereich beschreiben soll. Weiterhin ist ein Pufferbereich 54, ein Sequenzierer 56 und eine Kommissionierstation 58 vorgesehen. Zur Vervollständigung sind noch ein Hochregallager 60 und ein Shuttlelager 62 angegeben, die ebenfalls am Transportpfad 52 liegen. Meldet nun der Palettierer 50 einen Fehler, kann eine mögliche Fehlerursache im Palettierer 50 selbst liegen, aber auch in den Komponenten, mit denen dieser Palettierer 50 in Wechselwirkung steht.

Grundsätzlich kommen verschiedene Gründe infrage, wie beispielsweise mechatronische Fehler, Probleme im Warenfluss, Fehler des Bedieners, falsche Konfiguration des Palettierers oder auch sogenannte Umweltfehler, die beispielsweise auf abgelösten Folien beruhen. Im hier dargestellten Beispiel kann der diagnostizierte Fehler im Palettierer 50 auf Fehler im Pufferbereich 54, dem Sequenzierer 56 oder auch Fehler in der Kommissionierstation 58 zurückführbar sein. Die dortigen Fehler können bereits ursächlich sein, können aber auch wiederum Effekte von Fehlern in vorgelagerten Komponenten sein.

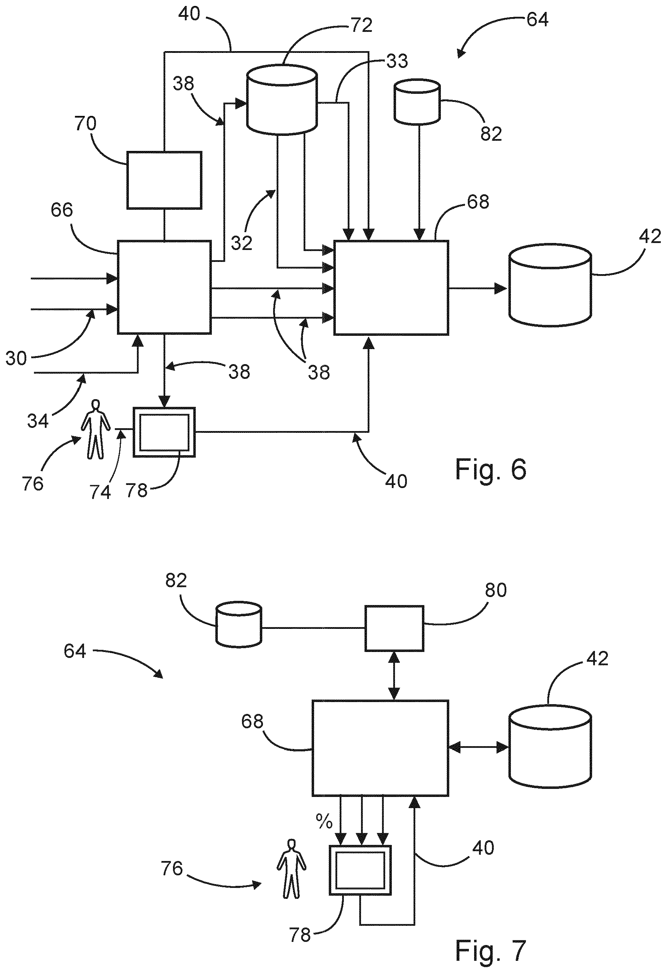

Fig. 6 zeigt in schematischer Darstellung eine Steuereinheit 64 eines Intralogistiksystems 10 zum Ermitteln einer Fehlerursache, also einer Operativanomalieursacheninformation 40. Zunächst ist eine Anomalieerkennungseinheit 66 vorgesehen, die ausgeführt ist, aus Signalsequenzen 30 des Intralogistiksystems 10 Operativanomaliesignalsequenzen 38 zu erkennen. Mit anderen Worten sollen hier Fehlerzustände aus den verschiedenen Signalsequenzen 30 des Systems erkannt werden. Zur Erkennung dienen als Referenz Normalbetriebssignalsequenzen 34, die einen entsprechenden Regelbetrieb in Bezug auf die Signalsequenzen 30 beschreiben sollen.

Durch die Auswertung von Abweichungen, beispielsweise mithilfe bestimmter Kennwerte oder Schwellenwerte, können Operativanomaliesignalsequenzen 38 identifiziert und weitergeleitet werden. Optional kann beispielsweise eine KI-Einheit 70 vorgesehen sein, die mithilfe eines künstlichen neuronalen Netzes eine Klassifizierung der Operativanomaliesignalsequenzen 38 vornimmt. Eine solche KI-Einheit 70 kann beispielsweise Hardwarekomponenten und/oder Softwarekomponenten aufweisen, die konfiguriert sind, KI-Aufgaben, KI-Berechnungen und/oder KI-Analysen durchzuführen.

Die identifizierten Operativanomaliesignalsequenzen 38 können zum Aufbau einer umfangreicheren Datenbasis zur späteren Auswertung in einer Referenzanomalie-Datenbank 72 gespeichert werden. Die im ersten Schritt identifizierten Operativanomaliesignalsequenzen 38 und/oder die in der Referenzanomalie-Datenbank 72 gespeicherten Referenzanomaliesignalsequenzen 32 werden einer Analyseeinheit 68 zugeführt. Diese Analyseeinheit 68 ist ausgeführt, aus den zur Verfügung gestellten Referenzanomaliesignalsequenzen 32 aus der Referenzanomalie-Datenbank 72 und/oder aus den Operativanomaliesignalsequenzen 38 Wirkzusammenhänge zwischen den Komponenten des Intralogistiksystems zu erkennen und daraus ein Graphenmodell 36 zu berechnen. Das Graphenmodell 36 ist beispielsweise in Form einer Adjazenzmatrix, Adjazenzliste oder Inzidenzmatrix einer Graphen-Datenstruktur in einer Graphendatenbank 42 speicherbar.

Die KI-Einheit 70 kann gemäß einem Beispiel ausgeführt oder konfiguriert sein, eine Operativanomalieursacheninformation 40, also eine Fehlerursache für die Operativanomaliesignalsequenz 38, zu ermitteln. Diese Operativanomalieursacheninformation 40 wird dann der Analyseeinheit 68 als zusätzliche Information zur Berechnung des Graphenmodells 36 bereitgestellt. Eine weitere Möglichkeit, eine Fehlerursache, also eine Operativanomalieursacheninformation 40 bereitzustellen, besteht in einem sogenannten Taggen 74 durch einen Bediener 76 des Intralogistiksystems 10.

So kann ein diagnostizierter Fehler, also eine Operativanomaliesignalsequenz 38, in geeigneter Form als Information auf einem Bedienterminal 78 zur Verfügung gestellt werden. Dort kann der Bediener 76 aufgrund seiner Erfahrung und seines Wissens eine zugehörige Fehlerursache, also eine Operativanomalieursacheninformation 40, eingeben. Diese Operativanomalieursacheninformation 40 wird also der Operativanomaliesignalsequenz 38 zugeordnet und somit zumindest ein Teil eines funktionellen Wirkzusammenhangs deutlich. Entsprechend wird diese vom Bediener 76 erzeugte Operativanomalieursacheninformation 40 der Analyseeinheit 68 zur weiteren Auswertung zur Verfügung gestellt.

Gemäß einem Beispiel wird die Operativanomalieursacheninformation 40 zusammen mit der zugehörigen Operativanomaliesignalsequenz 38 als Referenzanomaliesignalsequenz 32 mit der zugehörigen Referenzanomalieursacheninformation 33 in der Referenzanomalie-Datenbank 72 gespeichert. Mit anderen Worten weist die Referenzanomalie-Datenbank 72 dadurch verifizierte Kombinationen aus Fehlersignalsequenzen und den zugehörigen Fehlerursachen auf. Je höher die Zahl dieser Datenpaare ist, desto genauer kann die Analyseeinheit 68 ein zugehöriges Graphenmodell 36 berechnen. Die Referenzanomalie-Datenbank 72 stellt also die Referenzanomaliesignalsequenzen 32 mit den zugehörigen Referenzanomalieursacheninformationen 33 der Analyseeinheit 68 zur Auswertung zur Verfügung.

Betrachtet man die Signalsequenzen 30 aus dem Produktivbetrieb des Intralogistiksystems 10, werden der Analyseeinheit 68 zusätzlich die identifizierten Operativanomaliesignalsequenzen 38 und optional weiterhin die zugehörigen Operativanomalieursacheninformationen 40, also die zugehörigen Fehlerursachen, zur Auswertung und Berechnung des Graphenmodells 36 zur Verfügung gestellt. Die Operativanomalieursacheninformation 40 kann hierbei entweder über ein Tagging 74 durch den Bediener 76 oder auch über eine maschinelle Auswertung mithilfe beispielsweise einer KI-Einheit 70 ermittelt werden. Gemäß einem Beispiel ist die KI-Einheit ausgeführt, eine Referenzanomalieursacheninformation 33 aus der Vielzahl der gespeicherten Referenzanomaliesignalsequenzen 32 zu ermitteln.

Während in Fig. 6 ein Schwerpunkt der Betrachtung auf dem Generieren des Graphenmodells 36 aus den verschiedenen Eingangsgrößen und Eingangsinformationen gelegt wurde, steht in Fig. 7 der Aspekt der Verwendung des Graphenmodells 36 zum Ermitteln einer Fehlerursache in einem Intralogistiksystem 10 im Mittelpunkt. Hier ist ebenfalls eine Steuereinheit 64 eines Intralogistiksystems 10 mit einer Analyseeinheit 68, einer Graphendatenbank 42 gezeigt. Die Analyseeinheit 68 ist konfiguriert, auf Basis der in einem vorausgehenden Schritt zur Verfügung gestellten Operativanomaliesignalsequenz 38 eine zugehörige Operativanomalieursacheninformation 40, also eine wahrscheinliche Fehlerursache, aufgrund der im Graphenmodell 36 hinterlegten Wechselbeziehungen zwischen den Komponenten des Intralogistiksystems 10 zu berechnen.

Im hier dargestellten Beispiel in Fig. 7 werden dem Bediener 76 auf einem Bedienerterminal 78 mehrere mögliche Fehlerursachen, also Operativanomalieursacheninformationen 40, jeweils gewichtet mit einer Wahrscheinlichkeitsangabe zur Verfügung gestellt. Diese können beispielsweise als Entscheidungsvorlage dienen, die der Bediener dann durch seine eigene Expertise und Erfahrung ergänzt und dann eine aus seiner Sicht wahrscheinlichste Fehlerursache aus den vorgeschlagenen Operativanomalieursacheninformationen 40 auswählt. Mit anderen Worten dient die Analyseeinheit 68 hier als System zur Vorbereitung einer Entscheidung eines Bedieners 76. Die vom Bediener 76 dann final ausgewählte wahrscheinlichste Fehlerursache, also Operativanomalieursacheninformation 40, kann dann als Referenzanomaliesignalsequenz 32 zusammen mit der zugehörigen Referenzanomalieursacheninformation 33 in einer Referenzanomalie-Datenbank 72 (siehe Fig. 6) zur späteren Verwendung gespeichert werden.

In weiterer Betrachtung zur Fig. 7 ist eine Konfigurationseinheit 80 vorgesehen. Diese ist ausgeführt, eine Konfiguration 82 des Intralogistiksystems 10 zu erzeugen bzw. zu berechnen. Dies kann beispielsweise Teil eines bestehenden Provisionierungssystems für ein Intralogistiksystem 10 sein, die in der Planungsphase verwendet wird. Eine Konfiguration 82 des Intralogistiksystems 10 beinhaltet beispielsweise die Stücklisten, Parametrisierung und weitere wesentliche Details zum Aufbau und zum Konfigurieren des Intralogistiksystems 10. In der Planungsphase wird aufgrund der Komplexität derartiger Intralogistiksysteme 10 mit einem begrenzten Satz an Ausgangsinformationen und Variablen gearbeitet, um zunächst die wesentlichen Parameter eines Intralogistiksystems 10 auf Basis der Kundenanforderungen zu definieren. Häufig werden Wirkzusammenhänge erst in dem realen Intralogistiksystem 10 sichtbar, insofern wäre es wünschenswert, diese zusätzlichen Informationen in einer optimierten Konfiguration 82 des Intralogistiksystems 10 nutzbar zu machen.

Daher ist die Konfigurationseinheit 80 konfiguriert, auf Basis des Graphenmodells 36 eine optimierte Konfiguration 82 des Intralogistiksystems 10 zu berechnen, wobei vorteilhaft die tatsächlichen Wirkzusammenhänge aus dem realen Intralogistiksystem berücksichtigt werden können. Gemäß einem Beispiel erfolgt das Berechnen oder Generieren der optimierten Konfiguration 82 in einer Weise, dass das Auftreten von Operativanomaliesignalsequenzen 38, also das Auftreten von Fehlerzuständen, minimiert ist. Anders ausgedrückt soll durch die Kenntnis der Wirkzusammenhänge im Graphenmodell 36 eine anfänglich erstellte Konfiguration 82 des Intralogistiksystems 10 optimiert werden, sodass es zu deutlich weniger Fehlerfällen oder Ausfällen kommt. Allgemeiner ausgedrückt ist die Konfigurationseinheit 80 konfiguriert, auf Basis einer vorgegebenen Zielgröße 84 eine optimierte Konfiguration 82 des Intralogistiksystems 10 zu berechnen. Solche Zielgrößen können beispielsweise ein Auftreten von bestimmten Anomalien, Verringerung von Fehlerwahrscheinlichkeiten, eine Verringerung eines Energieverbrauchs, eine Verkürzung von Durchlaufzeiten, ein verringerter Verschleiß des Intralogistiksystems 10 oder ähnliche operative Größen sein.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenaufstellung

- 10: Intralogistiksystem
- 12: Wareneingang
- 14: Transportgüter
- 16: Lieferfahrzeuge
- 18: Regalsysteme
- 20: Regalbediengerät
- 22: mobiles Transportsystem
- 24: stationäres Transportsystem
- 26: Arbeitsplatz
- 27: Warenausgang
- 28: Sensorik
- 30: Signalsequenzen
- 32: Referenzanomaliesignalsequenzen
- 33: Referenzanomalieursacheninformation
- 34: Normalbetriebssignalsequenzen
- 36: Graphenmodell
- 38: Operativanomaliesignalsequenz
- 40: Operativanomalieursacheninformation
- 42: Graphendatenbank
- 44: Knoten
- 46: Kanten
- 48: Gewichtung
- 50: Palettierer
- 52: Transportpfad
- 54: Pufferbereich
- 56: Sequenzierer
- 58: Pickstation
- 60: Hochregallager
- 62: Shuttlelager
- 64: Steuereinheit des Intralogistiksystems
- 66: Anomalieerkennungseinheit
- 68: Analyseeinheit
- 70: KI-Einheit
- 72: Referenzanomalie-Datenbank
- 74: Taggen durch den Bediener
- 76: Bediener
- 78: Bedienerterminal
- 80: Konfigurationseinheit
- 82: Konfiguration des Intralogistiksystems
- 84: Zielgröße zur Konfiguration

- 100: Verfahren zum Ermitteln einer Fehlerursache
- 110: Bereitstellen von Referenzanomaliesignalsequenzen
- 120: Berechnen eines Graphenmodells
- 130: Bereitstellen einer Operativanomaliesignalsequenz
- 140: Berechnen einer Operativanomalieursacheninformation

## Patentansprüche

1. Computerimplementiertes Verfahren (100) zum Ermitteln einer Fehlerursache in einem Intralogistiksystem (10) mit einer Steuereinheit (64), wobei die Steuereinheit (64) eine Anomalieerkennungseinheit (66), eine Referenzanomalie-Datenbank (72), eine Analyseeinheit (68) und eine Graphendatenbank (42) umfasst, wobei das Verfahren (100) die Schritte aufweist:
Bereitstellen (110) einer Vielzahl von Referenzanomaliesignalsequenzen (32) relativ zu jeweils zugehörigen Normalbetriebssignalsequenzen (34) aus Signalsequenzen (30) einer Vielzahl von Komponenten des Intralogistiksystems (10), wobei die Signalsequenzen (30) Eigenschaften, Parameter, und/oder Zustandsinformationen der jeweiligen Komponente beschreiben, und wobei die Referenzanomaliesignalsequenzen (32) bekannte Anomaliesignalsequenzen (32, 38) aus dem Intralogistiksystem (10) und/oder zumindest einem anderen Intralogistiksystem (10) aufweisen, und wobei zusätzlich ein Bereitstellen einer Referenzanomalieursacheninformation (33) in Bezug auf die Referenzanomaliesignalsequenzen (32) erfolgt, und wobei die Referenzanomaliesignalsequenzen (32) mit den zugehörigen Referenzanomalieursacheninformationen (33) in der Referenzanomalie-Datenbank (72) gespeichert und der Analyseeinheit (68) zur Auswertung zur Verfügung gestellt werden;
Berechnen (120) eines Graphenmodells (36) des Intralogistiksystems (10) basierend auf der Vielzahl der bereitgestellten Referenzanomaliesignalsequenzen (32) und zusätzlich auf Basis der Referenzanomalieursacheninformation (33) durch die Analyseeinheit (68), wobei das Graphenmodell (36) eine technische Wechselwirkung der Komponenten des Intralogistiksystems (10) mithilfe der Eigenschaften, Parameter und/oder Zustandsinformationen beschreibt, und wobei das Graphenmodell (36) in Form einer Adjazenzmatrix, Adjazenzliste oder Inzidenzmatrix einer Graphen-Datenstruktur in der Graphendatenbank (42) gespeichert ist;
Bereitstellen (130) einer Operativanomaliesignalsequenz (38) relativ zu einer zugehörigen Normalbetriebssignalsequenz (34) aus Signalsequenzen (30) einer Vielzahl von Komponenten des Intralogistiksystems (10), wobei von der Anomalieerkennungseinheit (66) die Operativanomaliesignalsequenz (38) aus den Signalsequenzen (30) erkannt wird;
Berechnen (140), basierend auf dem berechneten Graphenmodell (36), Operativanomalieursacheninformationen (40) zur Operativanomaliesignalsequenz (38) des Intralogistiksystems (10) und einer Wahrscheinlichkeit des Auftretens einer jeweiligen Anomalieursache durch die Analyseeinheit (68);
Bereitstellen der berechneten Operativanomalieursacheninformationen (40) jeweils gewichtet mit Angabe der Wahrscheinlichkeit auf einem Bedienterminal (78) für einen Bediener (76);
Auswählen einer Operativanomalieursacheninformation (40) aus den vorgeschlagenen Operativanomalieursacheninformationen (40) durch den Bediener (76);
Speichern der ausgewählten Operativanomalieursacheninformation (40) als Referenzanomaliesignalsequenz (32) zusammen mit der zugehörigen Referenzanomalieursacheninformation (33) in der Referenzanomalie-Datenbank (72).

2. Verfahren (100) nach Anspruch 1, **dadurch gekennzeichnet, dass** die Steuereinheit (64) eine KI-Einheit (70) umfasst, wobei von der KI-Einheit (70) eine Operativanomalieursacheninformation (40) ermittelt und die Operativanomalieursacheninformation (40) der Analyseeinheit (68) als zusätzliche Information zur Berechnung des Graphenmodells (36) bereitgestellt wird.

3. Verfahren (100) nach Anspruch 1 oder 2, wobei das Bereitstellen der Referenzanomalieursacheninformation (33) über ein Mensch-Maschine-Schnittstelle (78) erfolgt.

4. Verfahren (100) nach einem der Ansprüche 1 bis 3, wobei das Berechnen des Graphenmodells (36) mithilfe von Verfahren der Graphen-Analyse, Machine Learning, Data Mining, Warteschlangentheorie und/oder Knowledge Discovery in Databases (KDD) erfolgt.

5. Verfahren (100) nach Anspruch 4, wobei die Graphen-Analyse bei der Berechnung des Graphenmodells (36) eine Konnektivitätsanalyse, Zugehörigkeitsanalyse und/oder Pfadanalyse aufweist.

6. Verfahren (100) nach einem der Ansprüche 1 bis 5, wobei das Bereitstellen (110) der Referenzanomaliesignalsequenzen (32) oder der Operativanomaliesignalsequenz (38) ein Erkennen einer Referenzanomaliesignalsequenz (32) oder der Operativanomaliesignalsequenz (38) aus einer Signalsequenz (30) durch KI-basierte und/oder Machine-Learning-basierte Mustererkennung aufweist.

7. Verfahren (100) nach einem der Ansprüche 1 bis 6, wobei das Bereitstellen der Referenzanomalieursacheninformation (33) durch ein künstliches neuronales Netz und/oder eine Machine-Learning-Einheit und/oder KI-Einheit (70) erfolgt, das mit validierten Kombinationen aus Anomaliesignalsequenzen (32, 38) und zugehörigen Anomalieursacheninformationen (33, 40) trainiert ist.

8. Verfahren (100) nach einem der Ansprüche 1 bis 7, wobei der Schritt des Bereitstellens (110) der Referenzanomalieursacheninformation (33) in Bezug auf die Referenzanomaliesignalsequenzen (32) den Schritt des Berechnens einer Wahrscheinlichkeit des Auftretens einer jeweiligen Anomalieursache umfasst.

9. Verfahren (100) nach einem der Ansprüche 1 bis 8, wobei zusätzlich ein Bereitstellen einer Konfiguration (82) des Intralogistiksystems (10) erfolgt und das Berechnen des Graphenmodells (36) zusätzlich auf Basis der Konfiguration (82) des Intralogistiksystems (10) erfolgt.

10. Verfahren (100) nach einem der Ansprüche 1 bis 9, wobei das Verfahren (100) weiterhin einen Schritt des Generierens einer optimierten Konfiguration (82) des Intralogistiksystems (10) und/oder seiner Komponenten auf Basis des berechneten Graphenmodells (36) des Intralogistiksystems (10) aufweist.

11. Verfahren (100) nach Anspruch 10, wobei das Generieren der optimierten Konfiguration (82) des Intralogistiksystems (10) derart erfolgt, dass eine Wahrscheinlichkeit eines Auftretens von Operativanomaliesignalsequenzen (38) minimiert ist.

12. Verfahren (100) gemäß einem der Ansprüche 1 bis 11, wobei das Bereitstellen der Referenzanomaliesignalsequenzen (32) derart erfolgt, dass die mehreren Referenzanomaliesignalsequenzen (32) von einer oder mehrerer Komponenten zumindest teilweise denselben Zeitraum betreffen.

13. Computerprogramm zum Ermitteln einer Fehlerursache in einem Intralogistiksystem (10), das beim Ausführen durch einen Prozessor ausgeführt ist, die Schritte des Verfahrens (100) gemäß Anspruch 1 bis 12 auszuführen.

14. Computerlesbares Medium, das ausgeführt ist, das Computerprogramm gemäß Anspruch 13 zu speichern.

15. Intralogistiksystem (10), mit einer Vielzahl von Komponenten, wobei die Komponenten
eine Komponente zum Lagern von Waren,
eine Komponente zum Bearbeiten von Aufträgen, und
eine Komponente zum Transport von Waren zwischen der Komponente zum Lagern von Waren und der Komponente zum Bearbeiten von Aufträgen aufweisen,
**dadurch gekennzeichnet, dass**
das Intralogistiksystem (10) dazu konfiguriert ist, das Verfahren (100) gemäß einem der Ansprüche 1 bis 12 auszuführen.

## Claims

1. A computer-implemented method (100) for determining a cause of fault in an intralogistics system (10) with a control unit (64), wherein the control unit (64) comprises an anomaly recognition unit (66), a reference anomaly database (72), an analysis unit (68) and a graph database (42), wherein the method (100) comprises the steps:
providing (110) a plurality of reference anomaly signal sequences (32) relative to respectively associated normal operation signal sequences (34) from signal sequences (30) of a plurality of components of the intralogistics system (10), wherein the signal sequences (30) describe properties, parameters, and/or condition information of the respective component, and wherein the reference anomaly signal sequences (32) comprise known anomaly signal sequences (32, 38) from the intralogistics system (10) and/or from at least one other intralogistics system (10), and wherein a reference anomaly cause information (33) is additionally provided in relation to the reference anomaly signal sequences (32), and wherein the reference anomaly signal sequences (32) with the associated reference anomaly cause information (33) are stored in the reference anomaly database (72) and provided to the analysis unit (68) for evaluation;
computing (120) a graph model (36) of the intralogistics system (10) on the basis of the plurality of the provided reference anomaly signal sequences (32) and additionally on the basis of the reference anomaly cause information (33) by the analysis unit (68), wherein the graph model (36) describes a technical interaction of the components of the intralogistics system (10) with the help of the properties, parameters and/or condition information, and wherein the graph model (36) is stored in the form of an adjacency matrix, adjacency list or incidence matrix of a graph data structure in the graph database (42);
providing (130) an operative anomaly signal sequence (38) relative to an associated normal operation signal sequence (34) from signal sequences (30) of a plurality of components of the intralogistics system (10), wherein the operative anomaly signal sequence (38) is recognized from the signal sequences (30) by the anomaly recognition unit (66);
computing (140), on the basis of the computed graph model (36), operative anomaly cause information (40) relating to the operative anomaly signal sequence (38) of the intralogistics system (10) and a probability of the occurrence of a respective anomaly cause by the analysis unit (68);
providing the computed operative anomaly cause information (40), each weighted with an indication of the probability, on an operator terminal (78) for an operator (76);
selecting an operative anomaly cause information (40) from the suggested operative anomaly cause information (40) by the operator (76);
storing the selected operative anomaly cause information (40) as a reference anomaly signal sequence (32) together with the associated reference anomaly cause information (33) in the reference anomaly database (72).

2. The method (100) according to claim 1, **characterized in that** the control unit (64) comprises an AI unit (70), wherein the AI unit (70) determines an operative anomaly cause information (40) and the operative anomaly cause information (40) is provided to the analysis unit (68) as additional information for computing the graph model (36).

3. The method (100) according to claim 1 or 2, wherein the providing of the reference anomaly cause information (33) is performed via a human-machine interface (78).

4. The method (100) according to one of claims 1 to 3, wherein the graph model (36) is computed using methods of graph analysis, machine learning, data mining, queuing theory and/or knowledge discovery in databases (KDD).

5. The method (100) according to claim 4, wherein the graph analysis in the computation of the graph model (36) comprises a connectivity analysis, affiliation analysis and/or path analysis.

6. The method (100) according to one of claims 1 to 5, wherein the providing (110) of the reference anomaly signal sequences (32) or of the operative anomaly signal sequence (38) comprises recognizing a reference anomaly signal sequence (32) or the operative anomaly signal sequence (38) from a signal sequence (30) using AI-based and/or machine-learning-based pattern recognition.

7. The method (100) according to one of claims 1 to 6, wherein the providing of the reference anomaly cause information (33) is performed by an artificial neural network and/or a machine-learning unit and/or AI unit (70), which has been trained with validated combinations of anomaly signal sequences (32, 38) and associated anomaly cause information (33, 40).

8. The method (100) according to one of claims 1 to 7, wherein the step of providing (110) the reference anomaly cause information (33) in relation to the reference anomaly signal sequences (32) comprises the step of computing a probability of the occurrence of a respective anomaly cause.

9. The method (100) according to one of claims 1 to 8, wherein a configuration (82) of the intralogistics system (10) is additionally provided and the graph model (36) is additionally computed on the basis of the configuration (82) of the intralogistics system (10).

10. The method (100) according to one of claims 1 to 9, wherein the method (100) further comprises a step of generating an optimized configuration (82) of the intralogistics system (10) and/or its components on the basis of the computed graph model (36) of the intralogistics system (10).

11. The method (100) according to claim 10, wherein the optimized configuration (82) of the intralogistics system (10) is generated in such a manner that a probability of an occurrence of operative anomaly signal sequences (38) is minimized.

12. The method (100) according to one of claims 1 to 11, wherein the reference anomaly signal sequences (32) are provided in such a manner that the multiple reference anomaly signal sequences (32) of one or multiple components at least partially relate to the same period of time.

13. A computer program for determining a cause of fault in an intralogistics system (10), which is configured to execute the steps of the method (100) in accordance with claim 1 to 12 during execution by a processor.

14. A computer-readable medium, which is configured to store the computer program in accordance with claim 13.

15. An intralogistics system (10) with a plurality of components, wherein the components comprise:
a component for storing articles,
a component for processing orders and
a component for transporting articles between the component for storing articles and the component for processing orders,
**characterized in that**
the intralogistics system (10) is configured to execute the method (100) in accordance with one of claims 1 to 12.

## Revendications

1. Procédé (100) mis en œuvre par ordinateur pour déterminer la cause d'une erreur dans un système intralogistique (10) comprenant une unité de commande (64), l'unité de commande (64) comprenant une unité de détection d'anomalies (66), une base de données d'anomalies de référence (72), une unité d'analyse (68) et une base de données graphiques (42), le procédé (100) comprenant les étapes suivantes :
fournir (110) une pluralité de séquences de signaux d'anomalie de référence (32) par rapport à des séquences de signaux de fonctionnement normal associées respectives (34) à partir de séquences de signaux (30) d'une pluralité de composants du système intralogistique (10), les séquences de signaux (30) décrivant des propriétés, paramètres et/ou informations d'état du composant respectif, et dans lequel les séquences de signaux d'anomalie de référence (32) comprennent des séquences de signaux d'anomalie connues (32, 38) provenant du système intralogistique (10) et/ou d'au moins un autre système intralogistique (10) et dans lequel, en outre, des informations sur les causes d'anomalie de référence (33) relatives aux séquences de signaux d'anomalie de référence (32) sont fournies ; et dans lequel les séquences de signaux d'anomalie de référence (32) sont stockées avec les informations sur les causes d'anomalie de référence associées (33) dans la base de données d'anomalies de référence (72) et sont mises à la disposition de l'unité d'analyse (68) pour évaluation ;
calcul (120) d'un modèle graphique (36) du système intralogistique (10) sur la base de la pluralité de séquences de signaux d'anomalie de référence (32) fournies et en outre sur la base des informations sur les causes d'anomalie de référence (33) par l'unité d'analyse (68), le modèle graphique (36) décrivant une interaction technique des composants du système intralogistique (10) à l'aide des propriétés, des paramètres et/ou des informations d'état, et le modèle graphique (36) étant stocké sous la forme d'une matrice d'adjacence, d'une liste d'adjacence ou d'une matrice d'incidence d'une structure de données graphiques dans la base de données graphiques (42) ;
fourniture (130) d'une séquence de signaux d'anomalie opérationnelle (38) par rapport à une séquence de signaux de fonctionnement normal associée (34) à partir de séquences de signaux (30) d'une pluralité de composants du système intralogistique (10), la séquence de signaux d'anomalie opérationnelle (38) étant détectée par l'unité de détection d'anomalies (66) à partir des séquences de signaux (30) ;
calcul (140), sur la base du modèle graphique calculé (36), des informations sur les causes d'anomalie opérationnelle (40) relatives à la séquence de signaux d'anomalie opérationnelle (38) du système intralogistique (10) et d'une probabilité d'apparition d'une cause d'anomalie respective par l'unité d'analyse (68) ;
fourniture à un opérateur (76) des informations calculées sur les causes d'anomalie opérationnelle (40), pondérées respectivement avec indication de la probabilité, sur un terminal de commande (78) ;
sélection par l'opérateur (76) d'une information sur les causes d'anomalie opérationnelle (40) parmi les informations proposées sur les causes d'anomalie opérationnelle (40) ;
stockage de l'information sur les causes d'anomalie opérationnelle sélectionnée (40) en tant que séquence de signaux d'anomalie de référence (32) avec l'information sur la cause de l'anomalie de référence associée (33) dans la base de données d'anomalies de référence (72).

2. Procédé (100) selon la revendication 1, **caractérisé en ce que** l'unité de commande (64) comprend une unité d'IA (70), dans lequel une information sur les causes d'anomalie opérationnelle (40) est déterminée par l'unité d'IA (70) et l'information sur les causes d'anomalie opérationnelle (40) est fournie à l'unité d'analyse (68) en tant qu'information supplémentaire pour le calcul du modèle graphique (36).

3. Procédé (100) selon la revendication 1 ou 2, dans lequel la fourniture des informations de référence sur les causes d'anomalies (33) s'effectue via une interface homme-machine (78).

4. Procédé (100) selon l'une des revendications 1 à 3, dans lequel le calcul du modèle graphique (36) s'effectue à l'aide de procédés d'analyse graphique, d'apprentissage automatique, d'exploration de données, de théorie des files d'attente et/ou de découverte de connaissances dans des bases de données (KDD, Knowledge Discovery in Databases).

5. Procédé (100) selon la revendication 4, dans lequel l'analyse de graphes lors du calcul du modèle graphique (36) comprend une analyse de connectivité, une analyse d'appartenance et/ou une analyse de chemin.

6. Procédé (100) selon l'une des revendications 1 à 5, dans lequel la fourniture (110) des séquences de signaux d'anomalie de référence (32) ou de la séquence de signaux d'anomalie opérationnelle (38) comprend la reconnaissance d'une séquence de signaux d'anomalie de référence (32) ou de la séquence de signaux d'anomalie opérationnelle (38) à partir d'une séquence de signaux (30) par reconnaissance de formes basée sur l'IA et/ou l'apprentissage automatique.

7. Procédé (100) selon l'une des revendications 1 à 6, dans lequel la fourniture des informations sur les causes d'anomalie de référence (33) est effectuée par un réseau neuronal artificiel et/ou une unité d'apprentissage automatique et/ou une unité d'IA (70) qui est entraînée avec des combinaisons validées de séquences de signaux d'anomalies (32, 38) et des informations de causes d'anomalies associées (33, 40).

8. Procédé (100) selon l'une des revendications 1 à 7, dans lequel l'étape de fourniture (110) des informations sur les causes d'anomalie de référence (33) en relation avec les séquences de signaux d'anomalie de référence (32) comprend l'étape de calcul d'une probabilité d'apparition d'une cause d'anomalie respective.

9. Procédé (100) selon l'une des revendications 1 à 8, dans lequel est fournie en outre une configuration (82) du système intralogistique (10) et est calculé, en outre, le modèle graphique (36) sur la base de la configuration (82) du système intralogistique (10).

10. Procédé (100) selon l'une des revendications 1 à 9, le procédé (100) comprenant en outre une étape de génération d'une configuration optimisée (82) du système intralogistique (10) et/ou de ses composants sur la base du modèle graphique calculé (36) du système intralogistique (10).

11. Procédé (100) selon la revendication 10, dans lequel la génération de la configuration optimisée (82) du système intralogistique (10) s'effectue de telle sorte que la probabilité d'apparition de séquences de signaux d'anomalie opérationnelle (38) soit minimisée.

12. Procédé (100) selon l'une des revendications 1 à 11, dans lequel la fourniture des séquences de signaux d'anomalie de référence (32) s'effectue de telle sorte que les multiples séquences de signaux d'anomalie de référence (32) d'un ou plusieurs composants concernent au moins en partie la même période.

13. Programme informatique pour déterminer une cause de défaut dans un système intralogistique (10), qui est exécuté lors de son exécution par un processeur, pour exécuter les étapes du procédé (100) selon les revendications 1 à 12.

14. Support lisible par ordinateur, qui est exécuté pour stocker le programme informatique selon la revendication 13.

15. Système intralogistique (10) comprenant une pluralité de composants, les composants présentant
un composant pour stocker des marchandises,
un composant pour traiter des commandes, et
un composant pour transporter des marchandises entre le composant pour stocker des marchandises et le composant pour traiter des commandes, **caractérisé en ce que**
le système intralogistique (10) est configuré pour exécuter le procédé (100) selon l'une des revendications 1 à 12.
